# FASCICULE DE BREVET EUROPEEN

(11) **EP 4 655 863 B1**
(45) Date de publication et mention de la délivrance du brevet: **07.10.2026**
(21) Numéro de dépôt: 24705713.6
(22) Date de dépôt: 25.01.2024
(51) Int. Cl.: H02K 5/20, H02K 9/22, F28F 13/00

(54) **MACHINE ÉLECTRIQUE**
ELEKTRISCHE MASCHINE
ELECTRIC MACHINE

(30) Priorité: 25.01.2023 FR 2300698
(43) Date de publication de la demande: 03.12.2025
(73) Titulaire: HUTCHINSON, 75008 Paris (FR)
(72) Inventeur: MOUNIER, Jean-Yves, 45200 PAUCOURT (FR)
(74) Mandataire: Ernest Gutmann - Yves Plasseraud S.A.S.
(86) Numéro de dépôt international: PCT/FR2024/050103
(87) Numéro de publication internationale: WO 2024/156967

(56) Documents cités:
- FR-A1- 3 036 880
- JP-A- 2013 135 611
- KR-A- 20190 107 054
- US-A1- 2014 070 637
- US-B1- 6 276 144
- RAM BANKA RAGHU ET AL: "A Critical Review on Mechanical Heat Switches for Engineering and Space Applications", HEAT TRANSFER ENGINEERING, 21 December 2022 (2022-12-21), pages 1 - 15, XP093081173, Retrieved from the Internet <URL:https://www.tandfonline.com/doi/full/10.1080/01457632.2022.2148348> [retrieved on 20230912]

## Description

### Domaine de la divulgation

L'invention appartient au domaine technique des machines électriques, aptes à former un moteur ou un générateur électrique.

### Etat de la technique

La forte expansion actuelle des véhicules électriques nécessite la conception de moteurs électriques associant compacité et forte puissance. L'utilisation récente de moteurs électriques pour la propulsion de la nouvelle génération de véhicules terrestres et aériens nécessite le développement de séries de moteurs électriques plus efficaces et plus performants. L'augmentation de la densité de puissance des moteurs électriques peut être limitée par des contraintes électriques et thermiques. L'augmentation de la température dans les machines électriques résulte des pertes électromagnétiques et mécaniques, générant de la chaleur dans les composants du moteur.

Un moteur électrique comporte classiquement un stator, un rotor et un carter. Le stator est généralement constitué de tôles et d'un bobinage, c'est-à-dire un enroulement de fils conducteurs, dont la plus grande partie est encastrée dans des encoches du stator. Le fonctionnement d'un moteur électrique consiste à faire circuler un courant électrique dans le bobinage, ce qui entraîne l'apparition d'un champ magnétique. Ce dernier crée un moment magnétique et entraîne en rotation le rotor.

La transformation de cette énergie électrique en énergie mécanique par le moteur ne se fait pas sans pertes de charge. Pour les moteurs électriques, selon les types de moteurs, entre 5 et 15% de la puissance électrique d'entrée est ainsi perdue.

Ces pertes peuvent être classées en plusieurs catégories : les pertes mécaniques, les pertes fer, les pertes liées aux charges parasites et les pertes Joule.

Les pertes mécaniques sont principalement dues au frottement à l'intérieur des roulements et à l'échauffement aérodynamique résultant d'un gradient de vitesse très élevé dans l'entrefer entre le rotor et le stator.

Les pertes fer et les pertes Joule sont des vecteurs de pertes thermiques réparties respectivement dans les tôles du stator et dans l'enroulement du bobinage. Les pertes fer sont produites par des effets magnétiques (hystérésis et courant de Foucault) et les pertes par effet Joule dans les enroulements sont dues à la résistivité du cuivre des conducteurs.

Il est donc primordial d'assurer une gestion thermique efficace du moteur électrique afin d'obtenir un moteur à haute densité de puissance. Un refroidissement efficace permet d'allier haute puissance et compacité du moteur afin de réduire l'encombrement des éléments constituant la voiture. De plus, une température de fonctionnement plus faible empêche la dégradation de l'isolant thermique et électrique entourant chaque conducteur constituant le bobinage. La durée de vie de l'isolant diminue avec la hausse de la température.

Pour un moteur à aimants permanents, qui est un des moteurs électriques les plus utilisés actuellement, les propriétés magnétiques des aimants permanents sont fortement dépendantes de la température de fonctionnement. Une forte hausse de température peut entraîner une démagnétisation irréversible de ces derniers. Enfin, une augmentation de la température du moteur entraîne une augmentation des pertes par effet joule. On notera que la résistance électrique des conducteurs croît linéairement avec l'augmentation de la température du moteur.

Afin de limiter la température, il est connu d'utiliser un fluide caloporteur permettant d'évacuer la chaleur générée par le moteur. Un refroidissement classique consiste ainsi à faire passer un écoulement d'eau ou d'air sur le carter qui entoure le stator. Un tel refroidissement présente toutefois des performances limitées car la chaleur générée par les bobines doit traverser des zones et des interfaces où la conduction thermique est faible.

Il est par ailleurs connu d'intercaler une chemise entre le stator et le carter du moteur électrique, ladite chemise délimitant des canaux permettant la circulation d'un fluide de refroidissement.

Les documents FR 3 036 880 A1 et WO 2021/236565 divulguent ainsi une machine électrique comportant un stator et un rotor apte à pivoter autour d'un axe et un élément de refroidissement s'étendant autour d'au moins une partie du stator, entre le stator et le carter. L'élément de refroidissement se présente sous la forme d'une chemise annulaire comportant des canaux de circulation permettant la circulation d'un fluide de refroidissement, ladite chemise étant en contact à la fois avec le carter, radialement externe, et avec le stator, radialement interne.

L'invention vise à proposer une machine électrique permettant de s'adapter à différentes phases de fonctionnement de ladite machine.

### Exposé de la divulgation

Pour répondre à un tel besoin, l'invention propose une Machine électrique comportant
un stator et un rotor apte à pivoter autour d'un axe,
un élément de refroidissement annulaire s'étendant autour d'au moins une partie du stator, ledit élément de refroidissement comportant au moins un canal de circulation apte à permettre la circulation d'un fluide de refroidissement,
un carter annulaire s'étend autour dudit axe et entourant au moins en partie l'élément de refroidissement,
caractérisée en ce que le stator présente un premier coefficient de dilatation thermique, l'élément de refroidissement présentant un deuxième coefficient de dilatation thermique, supérieur au premier coefficient de dilatation thermique, ledit élément de refroidissement étant monté de façon précontrainte autour du stator,
le carter présentant un troisième coefficient de dilatation thermique, supérieur ou égal au premier coefficient de dilatation thermique et inférieur au deuxième coefficient thermique, ledit carter entourant au moins en partie l'élément de refroidissement, un jeu annulaire radial étant formé entre l'élément de refroidissement et le carter, à une première température, ledit jeu étant apte à être comblé par dilatation différentielle entre l'élément de refroidissement et le carter, à une seconde température.

Les termes axial, radial et circonférentiel sont définis par rapport à l'axe de rotation du rotor.

Le montage précontraint, ou montage serré, signifie que le diamètre de l'élément de refroidissement au repos, c'est-à-dire non monté autour du stator est inférieur au diamètre de l'élément de refroidissement dans son état monté autour du stator.

Ainsi, en fonctionnement, lorsque la température de l'élément de refroidissement et du stator augmente, l'élément de refroidissement se dilate plus vite que le stator. En d'autres termes, le diamètre radialement externe de l'élément de refroidissement augmente plus rapidement que le diamètre externe du stator. De cette manière, la précontrainte de l'élément de refroidissement est partiellement réduite. Cette précontrainte est cependant déterminée de façon à ce que, à une température de fonctionnement normale, par exemple à une température comprise entre 90°C et 120°C, cette précontrainte ne soit pas nulle. En d'autres termes, quelle que soit la température de fonctionnement, le contact entre l'élément de refroidissement et le stator est maintenu.

Un tel contact permet d'assurer par exemple une étanchéité entre l'élément de refroidissement et le stator et/ou une dissipation des calories, par contact entre ledit élément de refroidissement et le stator.

Par ailleurs, le contact entre l'élément de refroidissement et le carter au-delà de la seconde température permet de pouvoir utiliser ce dernier comme dissipateur de calories.

Un tel contact permet également une meilleure atténuation des vibrations en fonctionnement, en particulier dans le cas où l'élément de refroidissement est réalisé en matériau élastomère.

Ainsi, dans un premier cas de fonctionnement, la température du fluide circulant dans le canal de l'élément de refroidissement est à basse température, par exemple à la première température.

Dans un tel cas, il est généralement nécessaire d'augmenter la température de ce fluide de façon à garantir un fonctionnement optimal de la machine électrique. En effet, si la température est trop basse, ce fluide peut présenter une viscosité trop importante, ce qui peut engendrer une surconsommation de fluide et/ou d'énergie nécessaire à la circulation de ce fluide. Ceci est obtenu dans le présent document en limitant les surfaces d'échange de chaleur, c'est-à-dire en évitant le contact entre l'élément de refroidissement et le carter, grâce au jeu radial entre ceux-ci.

A l'inverse, une fois la température optimale (par exemple la deuxième température) atteinte, il est généralement nécessaire de maximiser la dissipation de calories. Une telle dissipation est obtenue dans le présent document par contact entre ledit élément de refroidissement et le carter.

Les phénomènes de dilatations différentielles sont ainsi utilisés de façon à former un interrupteur thermique bénéfique au fonctionnement de l'ensemble.

Le stator et l'élément de refroidissement peuvent chacun s'étendre autour de l'axe X.

Le stator peut comporter un corps annulaire et un bobinage. Le corps peut être métallique. En particulier, le corps peut être formé d'un empilement de tôles métalliques. Le corps peut être réalisé en acier.

Le premier coefficient de dilatation thermique peut être compris entre 10 x 10⁻⁶ K⁻¹ et 12 x 10⁻⁶ K⁻¹.

Le deuxième coefficient de dilatation thermique peut être compris entre 40 x 10⁻⁶ K⁻¹ et 140 x 10⁻⁶ K⁻¹.

Le troisième coefficient de dilatation thermique peut être compris entre 20 x 10⁻⁶ K⁻¹ et 30 x 10⁻⁶ K⁻¹.

Le carter peut être métallique. Le carter peut être en aluminium.

Le jeu radial entre l'élément de refroidissement et le carter peut être compris entre 1 et 10 mm.

La deuxième température peut être comprise entre 70 et 110°C.

La matrice de l'élément de refroidissement peut être, au moins en partie, en matériau élastomère, par exemple en caoutchouc.

Le matériau élastomère peut être formulé de façon à présenter une conductivité thermique λ > 1 W.m-1.K-1.

Ledit matériau élastomère est par exemple apte à résister aux huiles et/ou à des températures élevées, par exemple de l'ordre de 150°C, sur des périodes de temps longues ou en continu.

Ledit élément de refroidissement est par exemple réalisé dans un élastomère choisi parmi la liste suivante : polyacryliques ACM, copolymères d'éthylène acrylate AEM, polymères fluorocarbonés FKM, fluorosilicones FVMQ, nitrile hydrogéné HNBR, ou est constitué d'un mélange de plusieurs élastomères parmi cette liste.

Ledit élastomère peut comporter des charges, telles par exemple que des charges carbonées (par exemple du graphite, des nanotubes de carbone, du noir de carbone ou du graphène), des charges métalliques (par exemple Ag, Cu, Al, TiO2, AIN) et/ou des charges céramiques (BN, Si).

De telles charges permettent de faciliter l'échange thermique et l'évacuation des calories, radialement vers l'extérieur.

Le taux de charge massique est par exemple compris entre 30 et 50%.

L'élément de refroidissement peut comporter des éléments de renforcement allongés noyés et solidaires d'une matrice en matériau synthétique de l'élément de refroidissement, les éléments de renforcement étant régulièrement répartis sur la circonférence, au moins une partie des éléments de renforcement s'étendant chacun selon une trajectoire en spirale autour de la chemise, la projection de la trajectoire en spirale de chaque élément de renforcement sur un plan parallèle à l'axe formant un angle avec ledit axe, l'angle étant compris entre 46 et 54°.

La présence et l'orientation des éléments de renforcement permet de limiter la dilatation axiale de l'élément de refroidissement. On notera que, lors d'une telle dilatation, les éléments de renforcement auront tendance à se réorienter selon un angle dit neutre dont la valeur est de 54,75°.

La surface radialement externe de l'élément de refroidissement peut comporter au moins une zone texturée comportant des parties en creux et/ou des parties saillies, destinée à venir en appui sur le carter.

Lesdites parties en creux et/ou lesdites parties en saillie sont aptes à venir en appui progressivement sur le carter lors de la dilatation de l'élément de refroidissement sous l'effet de la température. En d'autres termes, la zone de contact entre ledit élément de refroidissement et le carter peut augmenter progressivement avec la température.

Les éléments de renforcement peuvent être des fils.

Les fils peuvent être, au moins en partie, des fils textiles, par exemple en polyamide ou en polyester. Les fils peuvent être, au moins en partie, des fils métalliques, par exemple en acier inoxydable ou en cuivre.

Le diamètre de chaque fil peut être compris entre 0,25 et 2 mm, par exemple de l'ordre de 0,5 mm.

Le fluide de refroidissement peut être un fluide caloporteur ou un fluide frigorigène.

Ledit canal peut déboucher, au moins partiellement, au niveau de la surface radialement interne de l'élément de refroidissement, ledit canal étant délimité en partie par ledit élément de refroidissement et en partie par la surface externe du stator.

Dans un tel cas, la précontrainte de l'élément de refroidissement sur le stator assure également l'étanchéité dudit canal.

Au moins une extrémité axiale de l'élément de refroidissement peut être située axialement en retrait par rapport à l'extrémité correspondante du stator, à la première température.

Le terme en retrait signifie que ladite extrémité de l'élément de refroidissement ne dépasse pas axialement le stator.

Ladite extrémité de l'élément de refroidissement peut être située axialement au niveau de ou au-delà de ladite extrémité correspondante du stator, à une deuxième température, supérieure à la première température.

La distance axiale entre ladite extrémité de l'élément de refroidissement et ladite extrémité correspondante du stator, à ladite deuxième température, peut être limitée, par exemple inférieure à 1 mm. Ainsi, on garantit que la dilatation axiale de l'élément de refroidissement au-delà du stator reste maîtrisée, de façon à éviter par exemple toute interaction non souhaitée avec des éléments environnants.

L'extrémité axiale opposée de l'élément de refroidissement peut être apte à venir en appui sur un flasque solidaire axialement du stator et/ou du carter, de façon à empêcher le déplacement de ladite extrémité axiale opposée au-delà de l'extrémité correspondante du stator. Une telle caractéristique permet de limiter la dilatation axiale de l'élément de refroidissement dans un seul sens.

Le fluide de refroidissement peut être de l'huile ou un fluide non électriquement conducteur.

L'élément de refroidissement peut comporter plusieurs canaux agencés en parallèle, s'étendant circonférentiellement.

Chaque canal peut comporter une première extrémité formant une entrée de fluide de refroidissement et une seconde extrémité formant une sortie de fluide de refroidissement.

Les premières extrémités des canaux peuvent être reliées ensemble de manière à former une entrée commune. Les secondes extrémités des canaux peuvent être reliées ensemble de manière à former une sortie commune.

L'entrée de chaque canal peut être située en partie supérieure de l'élément de refroidissement. La sortie de chaque canal peut être située en partie inférieure de l'élément de refroidissement.

L'élément de refroidissement peut comporter au moins deux canaux opposés s'étendant chacun depuis une partie supérieure jusqu'à une partie inférieure de l'élément de refroidissement.

Les entrées desdits deux canaux opposés peuvent former une entrée commune. Les sorties desdits deux canaux peuvent être axialement opposés et déboucher à deux extrémités axiales opposés de l'élément de refroidissement.

Le stator peut comporter un corps annulaire d'axe X et un bobinage s'étendant axialement au-delà du corps au niveau d'une zone d'extrémité axiale du bobinage, le canal comportant une sortie débouchant à une extrémité axiale de l'élément, en regard d'une extrémité axiale correspondante du corps et en regard de la zone d'extrémité axiale correspondante du bobinage.

La sortie du canal peut être située en partie basse de l'élément de refroidissement.

L'élément de refroidissement peut également comporter un canal auxiliaire débouchant axialement en partie haute de l'élément de refroidissement, en regard d'une extrémité axiale correspondante du corps et en regard de la zone d'extrémité axiale correspondante du bobinage.

Le bobinage peut s'étendre axialement de part et d'autre du corps. Dans un tel cas, l'élément peut comporter deux canaux auxiliaires débouchant respectivement axialement en regard de chacune des zones d'extrémités du bobinage.

La machine électrique peut comporter un réservoir d'alimentation apte à alimenter chaque canal en fluide de refroidissement et un réservoir de collecte apte à recueillir le fluide de refroidissement issu de chaque canal. Un échangeur thermique peut être combiné au réservoir de collecte afin de garder constante la température du liquide de refroidissement.

Le réservoir d'alimentation peut être situé en regard de la partie supérieure du stator. Le réservoir de collecte peut être situé en regard de la partie inférieure du stator.

La machine électrique peut comporter une pompe permettant d'acheminer du fluide de refroidissement du réservoir de collecte vers le réservoir d'alimentation.

Le présent document propose également un procédé de fonctionnement d'une machine électrique du type précité, dans lequel à la première température, un jeu annulaire radial est formé entre l'élément de refroidissement et le carter, et dans lequel, à la seconde température, ledit jeu est comblé par dilatation différentielle entre l'élément de refroidissement et le carter.

### Brève description des figures

D'autres caractéristiques et avantages de la présente divulgation apparaîtront dans la description détaillée suivante, se référant aux dessins annexés dans lesquels :
[Fig. 1] est une vue éclatée, en perspective, d'une machine électrique selon une forme de réalisation de l'invention,
[Fig. 2] est une vue en perspective d'une partie de la machine électrique, l'élément de refroidissement étant représenté « en négatif », de manière à représenter uniquement les canaux de l'élément de refroidissement,
[Fig. 3] est une vue en perspective d'une partie de la machine électrique,
[Fig. 4] est une vue en perspective, de l'élément de refroidissement, sur lequel les éléments de renforcement sont représentés schématiquement en pointillés,
[Fig. 5] est une vue d'une partie de l'élément de refroidissement développé ou projeté sur un plan parallèle à l'axe dudit élément de refroidissement, les éléments de renforcement étant représentés en traits pointillés,
[Fig. 6] est une vue en coupe selon un plan radial illustrant les sections du stator, de l'élément de refroidissement et du carter, à la première température de fonctionnement,
[Fig. 7] est une vue correspondant à la figure 6, à la deuxième température de fonctionnement,
[Fig. 8] illustre différentes formes de réalisations de zones en saillie et/ou en creux de la surface radialement externe de l'élément de refroidissement.

### Description détaillée de la divulgation

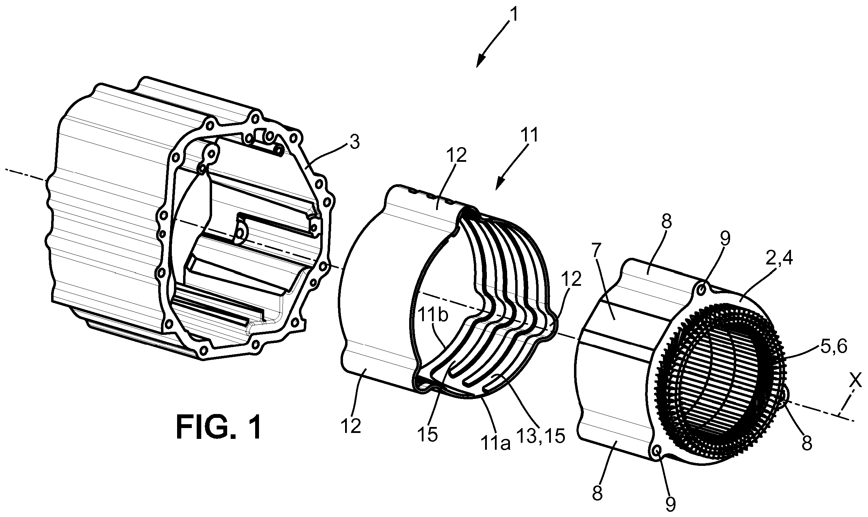

Les figures 1 à 7 illustrent une machine électrique 1 selon une première forme de réalisation de l'invention.

Celle-ci comporte un stator 2 pouvant comportant un corps annulaire 4 d'axe X et un bobinage 5 pouvant s'étendre notamment axialement au-delà du corps 4, de part et d'autre du corps 4, au niveau de zones d'extrémité axiales 6 du bobinage 5.

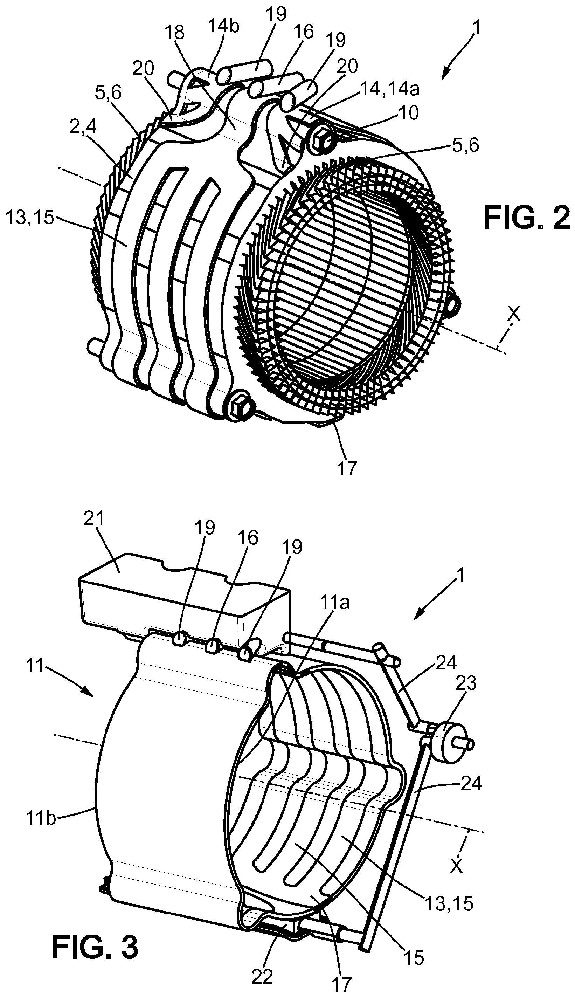

Le corps 4 peut être formé d'un empilement de tôles métalliques, par exemple en acier. Par ailleurs, le corps 4 peut comporter une partie annulaire 7 et comprendre par exemple trois lobes de fixation 8 (figure 1), s'étendant radialement vers l'extérieur depuis la partie annulaire 7. Chaque lobe 8 peut s'étendre axialement et comporte un trou 9 de passage d'une vis de fixation 10 (figure 2) apte à assurer la fixation du corps 4 sur un carter 3. Bien entendu, la partie annulaire peut être dépourvue de lobes 9. Le carter 3 peut être réalisé en aluminium.

Le bobinage 5 peut être est situé radialement à l'intérieur du corps 4.

La machine électrique 1 comporte un élément de refroidissement 11 annulaire, s'étendant autour du corps 4.

L'élément de refroidissement 11 peut se présenter sous la forme d'une chemise ou couche de matériau élastomère épousant la forme générale de la surface radialement externe du corps 4. L'élément de refroidissement 11 peut comporter ainsi des zones complémentaires 12 aux lobes 8 du corps 4.

L'élément de refroidissement 11 peut comporter un premier circuit de refroidissement 13 et un second circuit de refroidissement 14.

Le premier circuit de refroidissement 13 peut comporter deux parties globalement symétriques par rapport à un plan vertical. Chaque partie peut comporter plusieurs canaux parallèles 15, par exemple trois canaux 15, s'étendant circonférentiellement entre une entrée de fluide de refroidissement 16 et une sortie 17 de fluide.

L'entrée de fluide 16 peut être située en partie supérieure de l'élément de refroidissement 11 et peut être commune aux trois canaux 15 de la première partie et aux trois canaux 15 de la seconde partie du premier circuit de refroidissement 13. En particulier, l'entrée de fluide 16 peut être reliée aux extrémités supérieures des canaux 15 de chaque partie par une zone de liaison supérieure 18. Chaque partie du premier circuit de refroidissement peut comporter en outre une sortie de fluide 17 commune aux canaux 15 correspondants, et débouchant au niveau d'une extrémité axiale 11a, 11b de l'élément de refroidissement 11.

La sortie 17 de fluide de la première partie du premier circuit 13 peut déboucher au niveau d'une première extrémité axiale 11a de l'élément de refroidissement 11 et la sortie 17 de fluide de la seconde partie du premier circuit 13 peut déboucher au niveau d'une seconde extrémité axiale 11b dudit élément 11, opposée à la première extrémité 11a.

Le second circuit de refroidissement 14 (figure 2), optionnel, peut comporter une première partie 14a et une seconde partie 14b, situées chacune en partie supérieure de l'élément de refroidissement 11.

Chaque partie 14a, 14b du second circuit 14 peut comporter une entrée commune 19 de fluide située en partie supérieure et plusieurs canaux 20 s'étendant depuis ladite entrée et débouchant au niveau d'une extrémité axiale 11a, 11b de l'élément de refroidissement 11. Chaque canal 20 du second circuit 14 peut comporter une sortie 20a distincte des autres canaux 20 ou peut déboucher au niveau d'une sortie commune.

Les sorties des canaux 20 de la première partie 14a du second circuit 14 peuvent déboucher au niveau de la première extrémité axiale 11a de l'élément de refroidissement 11 et les sorties des canaux 20 de la seconde partie 14b peuvent déboucher au niveau de la seconde extrémité axiale 11b de l'élément de refroidissement 11.

L'entrée 16 du premier circuit 13 et les deux entrées 19 du second circuit 14 peuvent être alimentées en fluide de refroidissement par un réservoir d'alimentation 21 (figure 3) situé en partie supérieure de la machine électrique 1.

Un réservoir de collecte 22 situé en partie inférieure peut être apte à recueillir le fluide de refroidissement issu des différents circuits 13, 14. Un échangeur thermique peut être combiné au réservoir de collecte afin de garder constante la température du liquide de refroidissement.

Une pompe 23 et des conduites 24 peuvent permettre d'acheminer le fluide de refroidissement du réservoir de collecte 22 vers le réservoir d'alimentation 21.

Le fluide de refroidissement est par exemple de l'huile.

Chaque canal 15, 20 de chaque circuit 13, 14 peut comporter une section rectangulaire et peut comprendre une surface radialement interne et une surface radialement externe en forme de portion de cylindre, reliées par des flancs radiaux.

La surface radialement interne peut être formée par la surface radialement externe 4a du corps 4 du stator 2. En d'autres termes, les canaux 15, 20 peuvent être débouchant radialement vers l'intérieur et être refermés par le corps 4.

L'élément de refroidissement 11 peut comporter une matrice en matériau élastomère apte à résister aux huiles et/ou à des températures élevées, par exemple de l'ordre de 150°C, sur des périodes de temps longues ou en continu.

La matrice de l'élément de refroidissement 11 est par exemple réalisée dans un élastomère choisi parmi la liste suivante : polyacryliques ACM, copolymères d'éthylène acrylate AEM, polymères fluorocarbonés FKM, fluorosilicones FVMQ, nitrile hydrogéné HNBR, ou est constitué d'un mélange de plusieurs élastomères parmi cette liste.

Par ailleurs, ledit élastomère peut comporter des charges, telles par exemple que des charges carbonées (par exemple du graphite, des nanotubes de carbone, du noir de carbone ou du graphène), des charges métalliques (par exemple Ag, Cu, Al, TiO2, AIN) et/ou des charges céramiques (BN, Si).

Le taux de charge massique est par exemple compris entre 30 et 50%.

Le matériau élastomère peut être formulé de façon à présenter une conductivité thermique λ > 1 W.m-1.K-1.

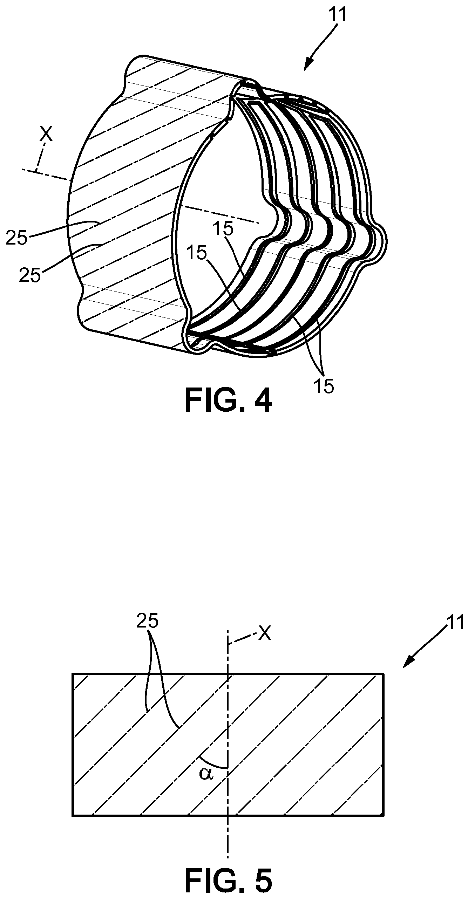

Comme illustré aux figures 4 et 5, l'élément de refroidissement 11 peut également comporter des éléments de renforcement 25 allongés, par exemple des fils, qui sont noyés et solidaires de la matrice élastomère.

Les fils peuvent être, au moins en partie, des fils textiles, par exemple en polyamide ou en polyester. Les fils peuvent également être, au moins en partie, des fils métalliques, par exemple en acier inoxydable ou en cuivre.

Les éléments de renforcement 25 peuvent être régulièrement répartis sur la circonférence, au moins une partie des éléments de renforcement 25 s'étendant chacun selon une trajectoire en spirale autour de la chemise, la projection de la trajectoire en spirale de chaque élément de renforcement sur un plan parallèle à l'axe (figure 5) formant un angle α avec ledit axe, l'angle α étant compris entre 46 et 54°.

Le coefficient de dilatation thermique du corps 4 est plus faible que le coefficient de dilatation thermique de l'élément de refroidissement 11. Afin de garantir le contact et l'étanchéité entre le corps 4 et l'élément de refroidissement 11, ce dernier est monté de façon précontrainte ou serré sur le corps 4.

Comme indiqué précédemment, le montage précontraint, ou montage serré, signifie que le diamètre de l'élément de refroidissement 11 au repos, c'est-à-dire non monté autour du corps 4 est inférieur au diamètre de l'élément de refroidissement 11 dans son état monté autour du corps 4.

Par ailleurs, le carter annulaire 3 peut présenter un coefficient de dilatation thermique qui est supérieur ou égal au coefficient de dilatation thermique du corps 4 et qui est inférieur au coefficient de dilatation thermique de l'élément de refroidissement 11.

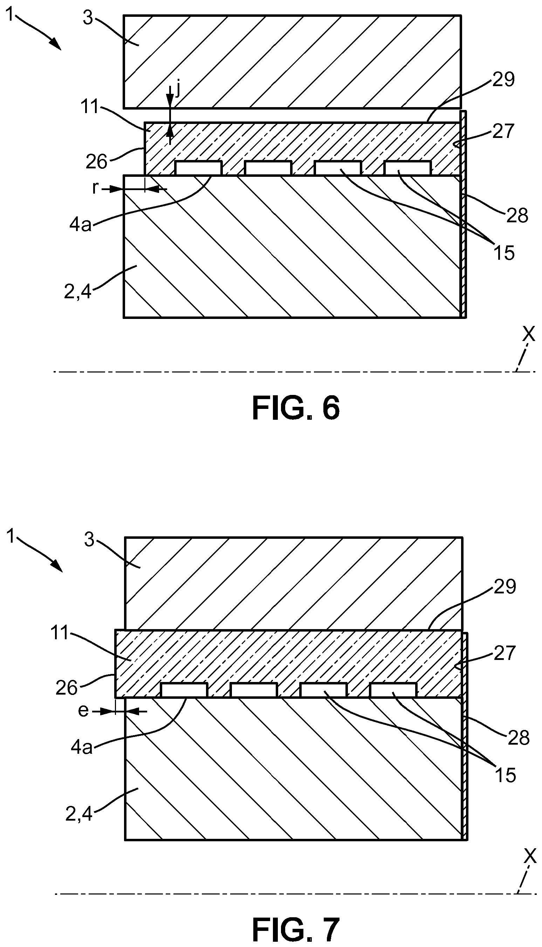

Un jeu annulaire radial j (figure 6) compris par exemple entre 1 et 10 mm, peut être formé entre l'élément de refroidissement 11 et le carter 3, à une première température, par exemple 20°C. Ce jeu j est apte à être comblé par dilatation différentielle entre l'élément de refroidissement 11 et le carter 3, à partir d'une seconde température, par exemple 90°C.

Bien entendu, il est possible d'adapter la machine électrique 1 de façon à ce que la seconde température soit différente de 90°C, par exemple comprise entre 70 et 110°C.

Par ailleurs, l'élément de refroidissement 11 comporte une première extrémité axiale 26 et une seconde extrémité axiale 27.

Comme illustré à la figure 6, la première extrémité axiale 26 peut être située axialement en retrait par rapport à l'extrémité correspondante du stator 2, à la première température.

Le terme en retrait signifie que ladite extrémité 26 de l'élément de refroidissement 11 ne dépasse pas axialement le stator. Un tel retrait r est par exemple compris entre 0 et 3 mm.

La seconde extrémité axiale 27 de l'élément de refroidissement 1 peut être apte à venir en appui sur un flasque 28 solidaire axialement du stator 2 et/ou du carter 3, de façon à empêcher le déplacement de ladite extrémité 27 axiale opposée au-delà de l'extrémité correspondante du stator 2.

La surface radialement externe 29 de l'élément de refroidissement 11 peut comporter au moins une zone texturée comportant des parties en creux et/ou des parties saillies, destinée à venir en appui sur le carter 3.

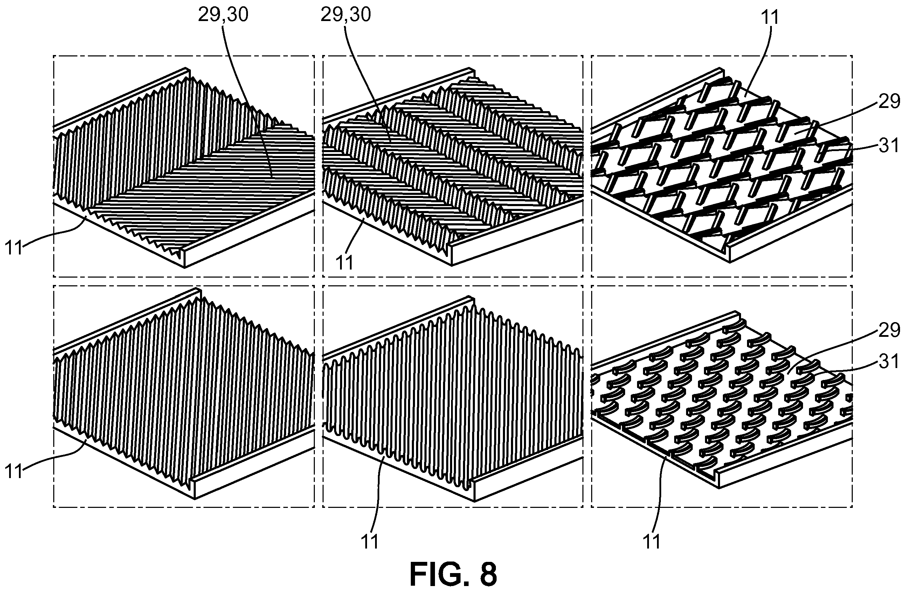

Les parties en saillie ou en creux peuvent comporter des rainures 30, à section rectangulaire ou triangulaire par exemple, orientées axialement ou selon un angle par rapport avec l'axe X (voir formes de réalisation 2 et 4 à la figure 8), ou présenter différentes rainures 30 avec des orientations différentes (voir formes de réalisation 1 et 3 à la figure 8). Bien entendu, tout autre type de zones en saillie et/ou en creux peut être utilisé. Ainsi, d'autres types de bossages 31 rectilignes ou courbes, illustrés aux formes de réalisation 5 et 6 de la figure 8 par exemple, peuvent être utilisés.

Lors du fonctionnement de la machine électrique 1, du fluide de refroidissement est amené par la pompe 23 dans le réservoir d'alimentation 21 et circule au travers des canaux 15, 20 des premier et second circuits de refroidissement 13, 14 avant de déboucher au niveau des parties supérieures et inférieures des extrémités axiales 11a, 11b de l'élément de refroidissement 11, au travers des sorties 17, 20a en regard des zones d'extrémités 6 des bobinages 5 de façon à les refroidir.

En début de fonctionnement, le fluide de refroidissement et plus généralement les différents éléments de la machine électrique, en particulier le stator 2, l'élément de refroidissement 11 et le carter 3, sont à une température basse (ou première température), par exemple 0°C ou 20°C en fonction des conditions environnementales extérieures par exemple.

A cette température, l'élément de refroidissement 11 n'est en contact qu'avec le stator 2, un jeu j existant entre la surface radialement externe 29 de l'élément de refroidissement 11 et le carter 3. Par ailleurs, l'extrémité 26 est en retrait par rapport à l'extrémité correspondante du stator 2.

Lors du fonctionnement de la machine électrique 1, le fluide de refroidissement voit sa température augmenter, de manière à atteindre une température optimale de fonctionnement (ou seconde température), par exemple 90°C. Lors de cet échauffement, le stator 2, l'élément de refroidissement 11 et le carter 3 se dilate de façon différenciée. Lors d'un tel échauffement, la dilatation de l'élément de refroidissement 11 en particulier tend à rattraper le jeu j, jusqu'à ce que la surface externe 29 de l'élément de refroidissement 11 vienne en appui sur le carter 3. Par ailleurs, les éléments de renforcement 25 permettent de limiter la dilatation axiale de sorte que, même si l'élément de refroidissement 11 peut s'étendre légèrement au-delà du stator 2 à la seconde température, une telle extension axiale e reste limitée (figure 7).

L'élément de refroidissement 11 peut alors évacuer des calories au travers du carter 3, ce qui permet de participer à la bonne régulation en température du fluide de refroidissement.

On notera que les parties en creux et/ou en saillie 30, 31 présentes à la surface externe 29 de l'élément de refroidissement 11 sont aptes à venir en appui progressivement sur le carter 3 lors de la dilatation de l'élément de refroidissement 11, sous l'effet de l'augmentation de la température. En d'autres termes, la zone de contact entre ledit élément de refroidissement 11 et le carter 3 peut augmenter progressivement avec la température.

Bien entendu la divulgation n'est nullement limitée au(x) mode(s) de réalisation décrit(s) à titre illustratif, non limitatif.

## Revendications

1. Machine électrique (1) comportant un stator (2) et un rotor apte à pivoter autour d'un axe (X),
un élément de refroidissement (11) annulaire s'étendant autour d'au moins une partie du stator (2), ledit élément de refroidissement (11) comportant au moins un canal (15) de circulation apte à permettre la circulation d'un fluide de refroidissement,
un carter (3) annulaire s'étend autour dudit axe (X) et entourant au moins en partie l'élément de refroidissement (11),
**caractérisée en ce que** le stator (2) présente un premier coefficient de dilatation thermique, l'élément de refroidissement (11) présentant un deuxième coefficient de dilatation thermique, supérieur au premier coefficient de dilatation thermique, ledit élément de refroidissement (11) étant monté de façon précontrainte autour du stator (2),
le carter présentant un troisième coefficient de dilatation thermique, supérieur ou égal au premier coefficient de dilatation thermique et inférieur au deuxième coefficient thermique, ledit carter (3) entourant au moins en partie l'élément de refroidissement (11), un jeu (j) annulaire radial étant formé entre l'élément de refroidissement (11) et le carter (3), à une première température, ledit jeu (j) étant apte à être comblé par dilatation différentielle entre l'élément de refroidissement (11) et le carter (3), à une seconde température.

2. Machine électrique (1) selon la revendication précédente dans laquelle la matrice de l'élément de refroidissement (11) est, au moins en partie, en matériau élastomère, par exemple en caoutchouc.

3. Machine électrique (1) selon l'une des revendications précédentes, ledit élément de refroidissement (11) comportant des éléments de renforcement (25) allongés noyés et solidaires d'une matrice en matériau synthétique de l'élément de refroidissement (11), les éléments de renforcement (25) étant régulièrement répartis sur la circonférence, au moins une partie des éléments de renforcement (25) s'étendant chacun selon une trajectoire en spirale autour de la chemise, la projection de la trajectoire en spirale de chaque élément de renforcement sur un plan parallèle à l'axe (X) formant un angle avec ledit axe (X), l'angle étant compris entre 46 et 54°.

4. Machine électrique (1) selon la revendication précédente, dans laquelle les éléments de renforcement (25) sont des fils.

5. Machine électrique (1) selon l'une des revendications précédentes, dans laquelle la surface radialement externe (29) de l'élément de refroidissement (11) comporte au moins une zone texturée comportant des parties en creux et/ou des parties saillies (30, 31), destinée à venir en appui sur le carter (3).

6. Machine électrique (1) selon l'une des revendications précédentes, dans laquelle l'élément de refroidissement (11) comporte au moins un canal (15) de circulation d'un fluide de refroidissement.

7. Machine électrique (1) selon la revendication précédente, dans laquelle ledit canal (15) débouche, au moins partiellement, au niveau de la surface radialement interne de l'élément de refroidissement (11), ledit canal (15) étant délimité en partie par ledit élément de refroidissement (11) et en partie par la surface externe du stator (2).

8. Machine électrique (1) selon l'une des revendications précédentes, dans laquelle au moins une extrémité axiale (26) de l'élément de refroidissement (11) est située axialement en retrait (r) par rapport à l'extrémité correspondante du stator (2), à la première température.

9. Procédé de fonctionnement d'une machine électrique (1) selon l'une des revendications précédentes, dans lequel à la première température, un jeu (j) annulaire radial est formé entre l'élément de refroidissement (11) et le carter (3), et dans lequel, à la seconde température, ledit jeu (j) est comblé par dilatation différentielle entre l'élément de refroidissement (11) et le carter (3).

## Patentansprüche

1. Elektrische Maschine (1), umfassend
einen Stator (2) und einen um eine Achse (X) schwenkbaren Rotor,
ein ringförmiges Kühlelement (11), das sich um zumindest einen Teil des Stators (2) erstreckt, wobei das Kühlelement (11) zumindest einen Strömungskanal (15) aufweist, der den Durchfluss eines Kühlmediums ermöglichen kann,
ein ringförmiges Gehäuse (3), das sich um die Achse (X) erstreckt und das Kühlelement (11) zumindest teilweise umgibt,
**dadurch gekennzeichnet, dass** der Stator (2) einen ersten thermischen Ausdehnungskoeffizienten aufweist, wobei das Kühlelement (11) einen zweiten thermischen Ausdehnungskoeffizienten aufweist, der größer ist als der erste thermische Ausdehnungskoeffizient, und wobei das Kühlelement (11) unter Vorspannung um den Stator (2) herum montiert ist,
wobei das Gehäuse einen dritten thermischen Ausdehnungskoeffizienten aufweist, der größer oder gleich dem ersten thermischen Ausdehnungskoeffizienten und kleiner als der zweite thermische Ausdehnungskoeffizient ist, wobei das Gehäuse (3) das Kühlelement (11) zumindest teilweise umgibt, wobei bei einer ersten Temperatur ein ringförmiges radiales Spiel (j) zwischen dem Kühlelement (11) und dem Gehäuse (3) entsteht, wobei dieses Spiel (j) bei einer zweiten Temperatur durch unterschiedliche Ausdehnung zwischen dem Kühlelement (11) und dem Gehäuse (3) ausgeglichen werden kann.

2. Elektrische Maschine (1) nach dem vorstehenden Anspruch, wobei die Matrix des Kühlelements (11) zumindest teilweise aus einem Elastomermaterial, beispielsweise aus Gummi, besteht.

3. Elektrische Maschine (1) nach einem der vorstehenden Ansprüche, wobei das Kühlelement (11) längliche Verstärkungselemente (25) aufweist, die in eine Kunststoffmatrix des Kühlelements (11) eingebettet und fest mit dieser verbunden sind, wobei die Verstärkungselemente (25) gleichmäßig über den Umfang verteilt sind, wobei sich zumindest ein Teil der Verstärkungselemente (25) jeweils entlang einer spiralförmigen Bahn um den Mantel herum erstreckt, wobei die Projektion der spiralförmigen Bahn jedes Verstärkungselements auf eine zur Achse (X) parallele Ebene einen Winkel mit der Achse (X) einschließt, wobei der Winkel zwischen 46 und 54° beträgt.

4. Elektrische Maschine (1) nach dem vorstehenden Anspruch, wobei es sich bei den Verstärkungselementen (25) um Drähte handelt.

5. Elektrische Maschine (1) nach einem der vorstehenden Ansprüche, wobei die radial äußere Fläche (29) des Kühlelements (11) zumindest einen strukturierten Bereich mit vertieften Abschnitten und/oder hervorstehenden Abschnitten (30, 31) aufweist, der dazu bestimmt ist, am Gehäuse (3) anzuliegen.

6. Elektrische Maschine (1) nach einem der vorstehenden Ansprüche, wobei das Kühlelement (11) zumindest einen Kanal (15) für den Durchfluss eines Kühlmediums aufweist.

7. Elektrische Maschine (1) nach dem vorstehenden Anspruch, wobei der Kanal (15) zumindest teilweise an der radial inneren Fläche des Kühlelements (11) mündet, wobei der Kanal (15) teilweise durch das Kühlelement (11) und teilweise durch die Außenfläche des Stators (2) begrenzt ist.

8. Elektrische Maschine (1) nach einem der vorstehenden Ansprüche, wobei zumindest ein axiales Ende (26) des Kühlelements (11) bei der ersten Temperatur axial um einen Abstand (r) gegenüber dem entsprechenden Ende des Stators (2) zurückversetzt ist.

9. Verfahren zum Betrieb einer elektrischen Maschine (1) nach einem der vorstehenden Ansprüche, wobei bei der ersten Temperatur ein ringförmiges radiales Spiel (j) zwischen dem Kühlelement (11) und dem Gehäuse (3) entsteht und bei der zweiten Temperatur dieses Spiel (j) durch unterschiedliche Ausdehnung zwischen dem Kühlelement (11) und dem Gehäuse (3) ausgeglichen wird.

## Claims

1. An electric machine (1) comprising
a stator (2) and a rotor which is capable of pivoting about an axis (X),
an annular cooling element (11) extending around at least a portion of the stator (2), said cooling element (11) comprising at least one circulation channel (15) capable of allowing the circulation of a coolant,
an annular casing (3) extending around said axis (X) and at least partly surrounding the cooling element (11),
**characterized in that** the stator (2) has a first coefficient of thermal expansion, the cooling element (11) having a second coefficient of thermal expansion which is greater than the first coefficient of thermal expansion, said cooling element (11) being mounted around the stator (2) in a prestressed manner,
the casing having a third coefficient of thermal expansion which is greater than or equal to the first coefficient of thermal expansion and is less than the second thermal coefficient, said casing (3) surrounding the cooling element (11) at least in part, a radial annular clearance (j) being formed between the cooling element (11) and the casing (3), at a first temperature, said clearance (j) being capable of being filled in by the differential expansion between the cooling element (11) and the casing (3), at a second temperature

2. Electric machine (1) according to the preceding claim, wherein the matrix of the cooling element (11) is made, at least in part, of elastomer material, for example rubber.

3. Electric machine (1) according to one of the preceding claims, said cooling element (11) comprising elongate reinforcement elements (25) embedded in and integral with a matrix of synthetic material of the cooling element (11), the reinforcement elements (25) being regularly distributed around the circumference, at least a portion of the reinforcement elements (25) each extending along a spiral path around the jacket, the projection of the spiral path of each reinforcement element onto a plane parallel to the axis (X) forming an angle with said axis (X), the angle being between 46 and 54°.

4. Electric machine (1) according to the preceding claim, wherein the reinforcement elements (25) are wires or threads.

5. Electric machine (1) according to one of the preceding claims, wherein the radially outer surface (29) of the cooling element (11) comprises at least one textured area comprising recessed portions and/or protruding portions (30, 31), intended to bear against the casing (3).

6. Electric machine (1) according to one of the preceding claims, wherein the cooling element (11) comprises at least one circulation channel (15) for circulating a coolant.

7. Electric machine (1) according to the preceding claim, wherein said channel (15) leads, at least in part, to the radially inner surface of the cooling element (11), said channel (15) being partly delimited by said cooling element (11) and partly by the outer surface of the stator (2).

8. Electric machine (1) according to one of the preceding claims, wherein at least one axial end (26) of the cooling element (11) is axially recessed (r) relative to the corresponding end of the stator (2), at the first temperature.

9. A method of operating an electric machine (1) according to one of the preceding claims, wherein, at the first temperature, a radial annular clearance (j) is formed between the cooling element (11) and the casing (3), and wherein, at the second temperature, said clearance (j) is filled in by the differential expansion between the cooling element (11) and the casing (3).
